# EUROPÄISCHE PATENTSCHRIFT

(11) **EP 2 908 195 B1**
(45) Veröffentlichungstag und Bekanntmachung des Hinweises auf die Patenterteilung: **05.07.2017**
(21) Anmeldenummer: 14155064.0
(22) Anmeldetag: 13.02.2014
(51) Int. Cl.: G05B 19/042, G05B 9/03

(54) **Verfahren zur Überwachung der Sicherheit in einem Automatisierungsnetzwerk sowie Automatisierungsnetzwerk**
Method for monitoring security in an automation network, and automation network
Procédé de surveillance de la sécurité dans un réseau d'automatisation et réseau d'automatisation

(43) Veröffentlichungstag der Anmeldung: 19.08.2015
(73) Patentinhaber: Siemens Aktiengesellschaft, 80333 München (DE)
(72) Erfinder: Palmin, Anna, 76187 Karlsruhe (DE)

(56) Entgegenhaltungen:
- EP-A1- 2 506 521
- US-A1- 2011 072 506
- US-A1- 2012 297 482
- US-A1- 2012 311 562
- ANNA PALMIN ET AL: "Ganzheitliches anlagenweites Security Management - Werkzeuge fuer die automatisierte Unterstuetzung", ATP EDITION, DIV DEUTSCHER INDUSTRIEVERLAG GMBH, DE , Bd. 54, Nr. 3 1. Januar 2012 (2012-01-01), Seiten 34-40, XP008170537, ISSN: 2190-4111 Gefunden im Internet: URL:https://www.di-verlag.de/de/Zeitschrif ten/atp-edition/2012/03/Ganzheitliches-anl agenweites-Security-Management

## Beschreibung

Die Erfindung betrifft ein Verfahren zur Überwachung der Sicherheit in einem Automatisierungsnetzwerk, in welchem mehrere Datenverarbeitungsgeräte zur Datenkommunikation miteinander verbunden sind, gemäß dem Oberbegriff des Anspruchs 1 sowie ein entsprechendes Netzwerk zu der industriellen Automatisierung.

Industrielle Automatisierungsnetzwerke bestehen aus Sicht der Datenverarbeitung aus einem Datennetzwerk sowie aus Datenverarbeitungsgeräten, welche zur Durchführung einer Datenkommunikation durch das Datennetzwerk miteinander verbunden sind. Automatisierungsnetzwerke können, z. B. um eine Bedienung einer durch das Automatisierungsnetzwerk automatisierten industriellen Anlage von einer entfernten Station zu ermöglichen, beispielsweise mittels eines Gateways an ein öffentliches Netzwerk, z. B Internet, angebunden sein. Diverse Vorteile bei der Realisierung moderner Automatisierungsnetzwerke führen zum verstärkten Einsatz von IT-Technologien wie Ethernet und dem Internet Protocol (IP). Das führt jedoch zu einer Erhöhung der Sicherheitsrisiken, beispielsweise durch unberechtigte Eingriffe von außen in das jeweilige Automatisierungsnetzwerk.

In dem Aufsatz "Ganzheitliches anlagenweites Security Management - Werkzeuge für die automatisierte Unterstützung", von Anna Palmin, Stefan Runde und Pierre Kobes, veröffentlicht in atp, März 2012, Seiten 34 bis 40, sind Maßnahmen zur Verbesserung der Sicherheit in industriellen Automatisierungsnetzwerken beschrieben. Eine der wesentlichen Maßnahmen im Rahmen eines ganzheitlichen Security Managements ist die Erfassung und Auswertung von Meldungen, die verschiedene Komponenten des Automatisierungsnetzwerks bei Ereignissen erzeugen und die möglicherweise einen Angriff erkennen lassen. Eine übergeordnete Einheit sammelt die Meldungen und wertet diese aus, um aus den gemeldeten Einzelereignissen oder einer Zusammensetzung mehrere Ereignisse zu erkennen, ob ein Angriff tatsächlich stattfindet, und ggf. diesen an eine Stelle zu melden, damit geeignete Maßnahmen als Reaktion auf den erkannten Angriff eingeleitet werden können. Diese Funktionalität wird als Security Event Management (SEM) bezeichnet. Eine weitere Funktionalität betrifft die Erzeugung von Berichten, um das Einhalten von Richtlinien nachzuweisen. Diese wird als Security Information Management (SIM) bezeichnet. Vereint eine Einheit die beiden genannten Funktionalitäten, so wird sie als Security Information and Event Management (SIEM) bezeichnet. Eine Recheneinheit mit einem Software-Werkzeug, welches in einem Automatisierungsnetzwerk zur Realisierung eines SIEM dient, wird in dem oben genannten Aufsatz als Security Station vorgestellt. Die Security Station ist strukturell in ein Prozessleitsystem (PLS) eingeordnet. Eine Operator Station sowie die Security Station können gemeinsam auf einem Personal Computer (PC) oder auf zwei separaten PCs laufen. Die Security Station kann ebenso auf einer bereits vorhandenen Maintenance Station realisiert sein. Sie dient dazu, das Security Management in das Prozessleitsystem zu integrieren und parallel zur Anlagenautomatisierung laufen zu lassen. So werden die vorhandenen Sichten wie z. B. Betriebs-Sicht und Maintenance-Sicht um eine zusätzliche integrierte Security-Sicht auf die Anlage ergänzt. Zudem lässt sich das in dem Automatisierungsnetzwerk vorhandene Melde- und Archivierungssystem nutzen, um die zu sicherheitsrelevanten Ereignissen erzeugten Meldungen zu verarbeiten. Alternativ zu einem integrierten Software-Werkzeug ist die Security Station als Werkzeug realisierbar, welches unabhängig von spezifischen Produkten ist und klar definierte Schnittstellen besitzt. Somit ist es flexibel im Kontext von PLS und SCADA-Systemen (Supervisory Control and Data Acquisition) einsetzbar. Das Software-Werkzeug der Security Station dient zur Überwachung der Sicherheit in dem Automatisierungsnetzwerk, und zwar anhand einer Erfassung und Auswertung von Meldungen, welche eine Bedieneinheit, häufig als Operator Station bezeichnet, eine speicherprogrammierbare Steuerung, ein sogenannter Controller, Netzwerkkomponenten, z. B. Router, Switches oder Gateways, oder Feldgeräte, z. B. Stellglieder oder Messumformer für Druck, Temperatur oder Durchfluss, erzeugen. Diese Geräte werden hier verallgemeinert als Datenverarbeitungsgeräte oder kurz als Event-Quellen bezeichnet und erzeugen aufgrund ihrer entsprechenden Vorkonfigurierung bei sicherheitsrelevanten Ereignissen diesen entsprechende Meldungen. Beispiele für sicherheitsrelevante Ereignisse sind ein erkannter fehlgeschlagener Anmeldeversuch an einem PC, der im Windows Event Log erfasst wird, oder ein erkannter unberechtigter Zugriff auf eine IP-Adresse, der durch eine Firewall abgewehrt und ggf. in eine Logdatei geschrieben wird. In sogenannten Konnektoren des SIEM-Systems wird eine Normalisierung der gemeldeten Ereignisse vorgenommen. Die Normalisierung wird in der Regel als Abbildung von einzelnen Bestandteilen bzw. Parametern auf die Datenstruktur des SIEM realisiert. Dabei sind vorgefertigte Konnektoren zur Integration von Syslog- und / oder SNMP-fähigen Komponenten wie Switches, Firewalls und Routern sowie vorgefertigte Konnektoren zur Integration von Windows-Komponenten vorhanden.

Ein SIEM-System wird in der Regel in der Engineering-Phase, d. h. bei der Projektierung und der Inbetriebsetzung einer automatisierungstechnischen Anlage, konfiguriert. Die Konfiguration umfasst u. a. die Anbindung von Datenverarbeitungsgeräten, welche als Quellen für Meldungen sicherheitsrelevanter Ereignisse in Frage kommen, an ein SIEM-System unter Verwendung der entsprechenden Konnektoren. Dabei wird angestrebt, dass das SIEM-System mit keinen Quellen von Ereignismeldungen, die ihm unbekannt sind, kommuniziert, da dies die Zuverlässigkeit der Sicherheitsüberwachung beeinträchtigen könnte. Ebenso ist dafür zu sorgen, dass bei sicherheitsrelevanten Ereignissen durch das betroffene Datenverarbeitungsgerät tatsächlich entsprechende Meldungen erzeugt werden.

Das primäre Ziel eines in einer Automatisierungsanlage eingesetzten SIEM-Systems besteht in der zeitnahen Erkennung und Auswertung von Hinweisen auf Angriffsversuche oder auf Abweichungen vom Normalzustand. Durch das SIEM-System soll es ermöglicht werden, auf Angriffsversuche und Abnormalitäten zeitnah und angemessen zu reagieren.

Der Erfindung liegt die Aufgabe zugrunde, die Qualität oder Zuverlässigkeit der Erkennung von Hinweisen auf Angriffsversuche oder auf Abweichungen vom Normalzustand in einem Automatisierungsnetzwerk zu verbessern.

Zur Lösung dieser Aufgabe weist das neue Verfahren zur Überwachung der Sicherheit in einem Automatisierungsnetzwerk die in Anspruch 1 sowie das neue Automatisierungsnetzwerk die in Anspruch 7 angegebenen Merkmale auf. In den abhängigen Ansprüchen sind vorteilhafte Weiterbildungen der Erfindung, in Anspruch 8 ein Computerprogramm und in Anspruch 9 ein Computerprogrammprodukt beschrieben.

Die Erfindung beruht auf der Erkenntnis, dass es für die Qualität der Erkennung von Angriffsversuchen oder von Abweichungen vom Normalzustand neben der Qualität der beispielsweise in einem SIEM-System verwendeten Auswerteeinheit, die als Correlation Engine bezeichnet wird, und der Qualität der unter Verwendung dieser Auswerteeinheit erstellten Regeln von entscheidender Bedeutung ist, dass die für die Erkennung notwendigen sicherheitsrelevanten Ereignisse von den Komponenten der automatisierungstechnischen Anlage, die hier als Datenverarbeitungsgeräte bezeichnet werden, an die Auswerteeinheit zuverlässig, d. h. z. B. konform zu den im Datenverarbeitungsgerät vorkonfigurierten Regeln und ohne Meldungsverlust bei der Übertragung, sowie manipulationssicher übermittelt werden. In vorteilhafter Weise wird nun sichergestellt, dass die beispielsweise an ein SIEM-System angebundenen, in der Engineering-Phase angemessen vorkonfigurierten Datenverarbeitungsgeräte als Quellen der Meldungen von sicherheitsrelevanten Ereignissen die zu ihrem Standardumfang gehörenden sicherheitsrelevanten Ereignisse im Betrieb des Automatisierungsnetzwerks auch tatsächlich melden. Falls die Erzeugung von entsprechenden Meldungen in einem Datenverarbeitungsgerät unterbunden wird, beispielsweise durch versehentliche Änderung der bei der Vorkonfiguration getroffenen Einstellungen, wird dies nun erkannt. In vorteilhafter Weise wird zudem sichergestellt, dass bei einem SIEM-System die sogenannten Konnektoren, die auch als Agents oder Forwarder bezeichnet werden und die im ersten Software-Werkzeug für die Übermittlung von Meldungen sicherheitsrelevanter Ereignisse von den Datenverarbeitungsgeräten als Meldungsquellen an die Auswerteeinheit zuständig sind, spezifikationsgemäß funktionieren. Eine Abweichung vom spezifikationsgemäßen Verhalten der Konnektoren, wenn z. B. ein Konnektor aufgrund eines technischen Problems keine Ereignisse mehr an die Auswerteeinheit des ersten Software-Werkzeugs weiterleitet, wird dies durch das zweite Software-Werkzeug erkannt.

Prinzipiell können Überprüfungen durch das zweite Software-Werkzeug anhand einer Erfassung und Auswertung von Meldungen nicht deterministisch, z. B. gesteuert durch einen Pseudozufallsgenerator, oder ereignisgesteuert initiiert werden. Vorzugsweise wird die Überprüfung der Meldungserzeugung deterministisch oder zyklisch in vorgegebenen oder vorgebbaren maximalen zeitlichen Abständen durchgeführt. Das hat den Vorteil einer besonders guten Verlässlichkeit der Überwachung der Sicherheit in einem Automatisierungsnetzwerk.

Zur Überprüfung der Meldungserzeugung werden mithilfe des zweiten Software-Werkzeugs Angriffsszenarien simuliert, bei welchen durch das zumindest eine Datenverarbeitungsgerät im fehlerfreien Zustand dem jeweiligen Szenario entsprechende Meldungen erzeugt werden. Die aufgrund einer Simulation eines Angriffsszenarios erzeugten Meldungen werden selbstverständlich in dem ersten Software-Werkzeug von einer weiteren Auswertung ausgeschlossen, um keinen Fehlalarm auszulösen, oder die aufgrund dieser Meldungen erzeugten Alarme werden von einer Weiterleitung ausgeschlossen.

In einer besonders vorteilhaften Weiterbildung werden zur Überprüfung der durch das erste Software-Werkzeug durchgeführten Auswertung von Meldungen mithilfe des zweiten Software-Werkzeugs manipulierte Meldungen erzeugt, die den bei sicherheitsrelevanten Ereignissen durch Datenverarbeitungsgeräte erzeugten Meldungen entsprechen. Auf diese Weise kann vorteilhaft geprüft werden, ob Trojaner oder andere "Malware", d. h. schädliche Daten im Automatisierungsnetzwerk, erkannt werden. Die Überwachung der Sicherheit wird dadurch weiter verbessert.

In einer weiteren besonders vorteilhaften Ausgestaltung ist das erste Software-Werkzeug ein Bestandteil eines ersten SIEM-Systems im Automatisierungsnetzwerk und das zweite Software-Werkzeug ein Bestandteil eines zweiten SIEM-Systems, welches zu dem ersten SIEM-System im Netzwerk redundant ausgeführt ist. Dadurch wird die Realisierung eines Verfahrens zur Lastverteilung zwischen den beiden SIEM-Systemen ermöglicht und einer Überlastung des sogenannten Intelligence Layers, der hier als Auswerteeinrichtung bezeichnet wird, und des sogenannten Connector Layers, welcher die Konnektoren aufweist, vorgebeugt. Die Überprüfung der Meldungserzeugung kann vorteilhaft durch das zweite Software-Werkzeug parallel erfolgen, ohne im fehlerfreien Fall die Funktion des ersten Software-Werkzeugs zu beeinflussen.

Die Überprüfung der durch das erste Software-Werkzeug durchgeführten Meldungserzeugung kann zum einen mit Vorteil zur Verifikation der Vorkonfigurierung von Datenverarbeitungsgeräten in der Engineering-Phase oder zum anderen zur Überwachung der Sicherheit während des Betriebs des Automatisierungsnetzwerks durchgeführt werden. Die Erfindung erlaubt somit die Überwachung der Sicherheit in verschiedenen Phasen des Anlagenlebenszyklus.

Vorzugsweise wird bei Erkennen eines Sicherheitsproblems in dem Automatisierungsnetzwerk ein entsprechendes Warnsignal zur Anzeige eventuell erforderlicher Wartungsmaßnahmen unmittelbar auf einem Servicegerät ausgegeben, damit ein Servicetechniker bereits vor Ort geeignete Anweisungen zur Durchführung der Wartungsarbeiten, beispielsweise zum Austausch eines mit Malware infizierten Datenverarbeitungsgeräts, erhält.

Das Verfahren ist bevorzugt in Software oder in einer Kombination Soft-/Hardware implementiert, sodass die Erfindung auch ein Computerprogramm mit durch einen Computer ausführbaren Programmcodeanweisungen zur Implementierung des oben skizzierten und nachfolgend beschriebenen Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Datenverarbeitungsgeräts in dem Automatisierungsnetzwerk oder wird in einem Speicher der Elektronik eines Datenverarbeitungsgeräts vorgehalten oder ist in diesen Speicher ladbar, sodass beim Betrieb des Datenverarbeitungsgeräts die Sicherheitsüberwachung nach dem Verfahren automatisch ausgeführt wird.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: ein Blockschaltbild eines Automatisierungsnetzwerks,
- Figur 2: ein Blockschaltbild zur Verdeutlichung einer Überprüfung einer Meldungserzeugung,
- Figur 3: ein Blockschaltbild zur Verdeutlichung einer Überprüfung von Konnektoren und
- Figur 4: ein Blockschaltbild zur Verdeutlichung einer Überprüfung einer zuverlässigen Erkennbarkeit von manipulierten Meldungen.

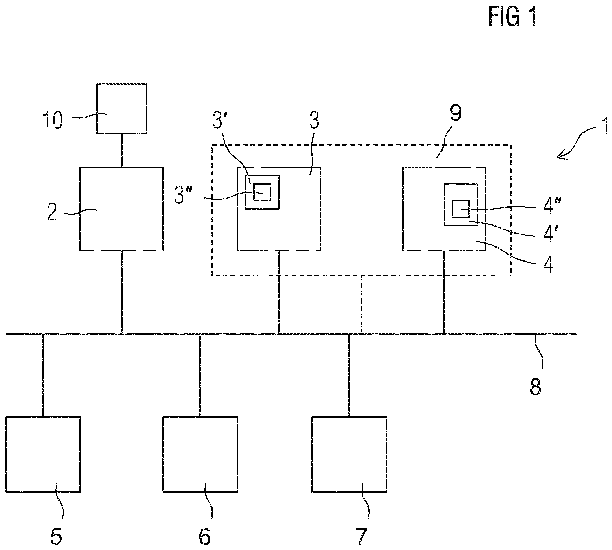

In Figur 1 ist ein Automatisierungsnetzwerk 1 dargestellt, in welchem mehrere Datenverarbeitungsgeräte 2...7 zur Datenkommunikation durch ein Ethernet-basiertes Kommunikationsnetz 8 miteinander verbunden sind. In dem gezeigten Ausführungsbeispiel ist das Datenverarbeitungsgerät 2 eine sogenannte Engineering Station, welche zur Projektierung und Inbetriebsetzung des Automatisierungsnetzwerks 1 dient und im Betrieb des Automatisierungsnetzwerks 1 die Funktion einer Operator Station des Prozessleitsystems übernimmt. Bei den Datenverarbeitungsgeräten 3 und 4 handelt es sich jeweils um sogenannte Security Stations, wobei im Datenverarbeitungsgerät 3 ein erstes Software-Werkzeug 3' abläuft, welches einen Bestandteil eines sogenannten Industrial SIEM bildet und wobei in der zweiten Security Station, d. h. in dem Datenverarbeitungsgerät 4, ein zweites Software-Werkzeug 4' abläuft, welches einen Bestandteil eines zu dem ersten Industrial SIEM redundant ausgebildeten zweiten Industrial SIEM bildet. Alternativ können die beiden Software-Werkzeuge 3' und 4' selbstverständlich auf einer einzigen Security Station 9 ablaufen, wie dies in Figur 1 mit durchbrochenen Linien angedeutet ist. Die Datenverarbeitungsgeräte 5, 6 und 7 sind prozessnahe Komponenten wie beispielsweise eine speicherprogrammierbare Steuerung, die häufig als Controller bezeichnet wird, ein Messumformer zur Erfassung einer physikalischen Variable im zu automatisierenden Prozess, z. B. eines Drucks, bzw. ein Stellglied zur Beeinflussung des Prozesses in Abhängigkeit der erfassten physikalischen Variable, z. B. ein Regelventil.

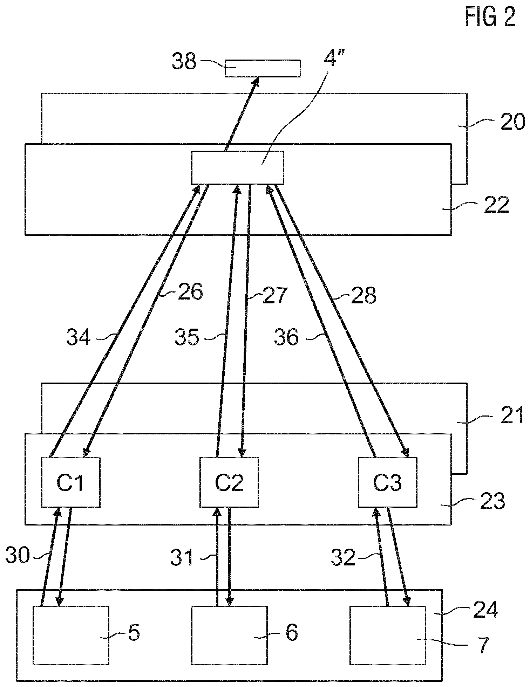

Für eine redundante Funktion der beiden SIEMs, die auf den Security Stations 3 bzw. 4 implementiert sind und ein redundantes SIEM-System bilden, werden beide SIEMs von der Engineering Station 2 mit denselben Projektierungsdaten und denselben Informationen über die Hardware-Struktur des Automatisierungsnetzwerks 1 versorgt. Das zweite Software-Werkzeug 4', mit dessen Hilfe das zweite SIEM realisiert ist, ist um ein Modul 4" zur Überprüfung der Funktion des ersten SIEM erweitert, das entsprechend seiner Funktion als Reliability and Trustability Verifier-Modul bezeichnet wird. Durch die redundante Auslegung des SIEM-Systems wird die Umsetzung eines geeigneten Verfahrens zur Lastverteilung, eines sogenannten Load Balancing-Verfahrens ermöglicht, durch welches der Überlastung des sogenannten SIEM-Intelligence Layers, der u. a. eine Auswerteeinheit beinhaltet, und des sogenannten Connector Layers, der alle SIEM-Konnektoren zur Anbindung von Event-Quellen umfasst, vorgebeugt wird. Des Weiteren wird durch das Modul 4" die Durchführung der später anhand der Figuren 2 bis 4 näher beschriebenen Überwachungs- und Verifikationsvorgänge ermöglicht. Während sich beispielsweise das erste SIEM den primären SIEM-Aufgaben widmet, führt das zweite SIEM als sein redundanter Partner gesteuert durch sein Reliability and Trustability Verifier-Modul 4" die Vorgänge zur Überprüfung der Funktion des ersten SIEM sowie Verifikationsvorgänge durch. Um dies zu ermöglichen, werden Meldungen von sicherheitsrelevanten Ereignissen in dem Automatisierungsnetzwerk 1, die in bekannter Weise an das erste Software-Werkzeug 3' übertragen werden, zusätzlich auch an das zweite Software-Werkzeug 4' übertragen, welches beispielsweise erfasste Meldungen auswertet, um zu überprüfen, ob die Meldungen tatsächlich gemäß einer korrekten Vorkonfigurierung der Datenverarbeitungsgeräte 2...7 erzeugt wurden. Erfolgt bei Erkennen eines Sicherheitsproblems in dem Automatisierungsnetzwerk die Ausgabe des Warnsignals zur Anzeige eventuell erforderlicher Wartungsmaßnahmen auf einem Servicegerät 10, kann ein Servicetechniker vorteilhaft vor Ort die für eine Planung seiner Wartungsmaßnahmen erforderlichen Informationen erhalten.

Das erste Software-Werkzeug 3' ist in dem gezeigten Ausführungsbeispiel ebenfalls mit einem Reliability and Trustability Verifier-Modul 3" ausgestattet, welches dem Modul 4" entspricht. Dies ermöglicht eine Umschaltung, bei welcher das erste SIEM, welches bisher aktiv war, zum redundanten SIEM wird und das zweite, bisher redundante SIEM, welches nun das aktuell wirksame SIEM wird, auf korrekte Funktion überwacht. Somit wird eine zyklisch wechselnde, gegenseitige Überwachung durchgeführt.

Zur weiteren Erläuterung des Verfahrens zur Überprüfung der Sicherheit in einem Automatisierungsnetzwerk ist in den Figuren 2 bis 4 die redundant ausgelegte Architektur des SIEM-Systems in einem Schichtenmodell dargestellt. Für gleiche Teile werden in den Figuren 1 bis 4 gleiche Bezugszeichen verwendet. Ein SIEM-Intelligence Layer 20 und ein SIEM-Connector Layer 21 sind im Wesentlichen in dem ersten Software-Werkzeug 3' (Figur 1) realisiert. Ein SIEM-Intelligence Layer 22 und ein SIEM-Connector Layer 23 sind Bestandteile des zweiten SIEM, welches durch das zweite Software-Werkzeug 4' (Figur 1) ausgeführt wird. Ein sogenannter Device Layer 24, in welchem die Meldungserzeugung bei sicherheitsrelevanten Ereignissen gemäß vorkonfigurierten Regeln erfolgt, ist im Wesentlichen durch Software in den Datenverarbeitungsgeräten 5...7 realisiert.

Eine sogenannte "Events Generation Verification", d. h. eine Überprüfung der Meldungserzeugung, gemäß Figur 2 kann sowohl in der Engineering-Phase als auch in der Runtime-Phase, d. h. im Betrieb eines Automatisierungsnetzwerks, in deterministischer Weise zyklisch, nicht deterministisch, z. B. gesteuert durch einen Pseudozufallsgenerator, oder ereignisgesteuert durch das Reliability and Trustability Verifier-Modul 4" initiiert werden. Dabei werden ausgewählte oder alle Konnektoren C1, C2 und C3, die beispielsweise in dem Automatisierungsnetzwerk 1 gemäß Figur 1 Konnektoren zu den Datenverarbeitungsgeräten 5, 6 bzw. 7 darstellen, jeweils durch ein Signal 26, 27 bzw. 28 oder einen Befehl dazu aufgefordert, zu überprüfen, ob die angebundenen Event-Quellen, d. h. die Datenverarbeitungsgeräte 5, 6 bzw. 7, die Meldungen 30, 31 bzw. 32 tatsächlich erzeugen, die den zu ihrem jeweiligen Standardumfang gehörenden, sicherheitsrelevanten Ereignissen entsprechen. Dazu werden durch die Konnektoren C1, C2 und C3 die entsprechenden Event-Schnittstellen abgefragt oder Angriffsszenarien simuliert, damit die angebundenen Event-Quellen ihrer jeweiligen Vorkonfiguration entsprechende Meldungen generieren. Zum Beispiel gehören zum Standardumfang von Microsoft Windows diverse Events, die im sogenannten Windows Event Log erfasst werden können. Damit die Events jedoch tatsächlich erfasst werden, bedarf es spezieller Systemeinstellungen. Falls die entsprechenden Systemeinstellungen nicht vorgenommen wurden, wird der entsprechende Konnektor bei der Überprüfung der Meldungserzeugung keine Windows Event Log Events erhalten. Das jeweilige Ergebnis der Überprüfung wird von den Konnektoren C1, C2 und C3 durch ein Signal 34, 35 bzw. 36 an das Reliability and Trustability Verifier-Modul 4" gemeldet, welches es spezifikationsgemäß weiterverarbeitet und ggf. an weitere Instanzen, z. B. in Form von Alarmen an ein SIEM-Meldesystem 38, weitergibt. Durch diese Instanzen können umgehend angemessene Reaktionen, z. B. eine Konfigurationsänderung an einer Event-Quelle, veranlasst werden.

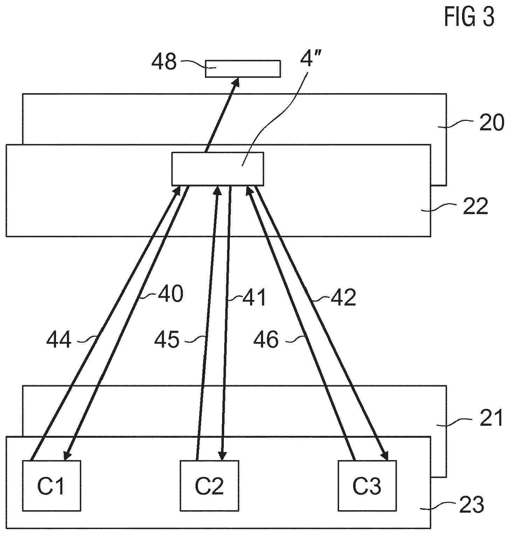

Ein zweiter Überprüfungsmodus, der als "Connectors Reliability Verification" bezeichnet wird, wird im Folgenden anhand Figur 3 erläutert. Diese Überprüfung kann, wie bereits die anhand Figur 2 erläuterte Events Generation Verification, sowohl in der Engineering-Phase als auch in der Runtime-Phase zyklisch, nicht deterministisch oder ereignisgesteuert durch das Reliability and Trustability Verifier-Modul 4" initiiert werden. Bei der Überprüfung der Konnektoren, d. h. bei der Connectors Reliability Verification, fordert das Modul 4" von ausgewählten oder allen Konnektoren C1, C2 und C3 durch jeweils ein Signal oder einen Befehl 40, 41 bzw. 42 eine vorgegebene Anzahl von Ereignismeldungen. In dem Fall, wenn die Konnektoren C1, C2 und C3 spezifikationsgemäß funktionieren, liefern sie die angeforderte Anzahl der Meldungen 44, 45 bzw. 46 an das Modul 4" zurück, welches zuerst den Empfang quittiert und anschließend die Anzahl der Meldungen mit der angeforderten Anzahl vergleicht. Im Falle einer Nichtübereinstimmung liegt ein Problem an dem jeweiligen Konnektor C1, C2 bzw. C3 und / oder ein Kommunikationsproblem vor. Ein Ergebnis des Verifikationsvorgangs wird vom Modul 4" spezifikationsgemäß weiterverarbeitet und ggf. an weitere Instanzen, z. B. in Form von Alarmen an ein SIEM-Meldesystem 38, weitergegeben. Durch diese Instanzen können wiederum angemessene Reaktionen, z. B. eine Konfigurationsänderung eines als problembehaftet erkannten Konnektors, veranlasst werden.

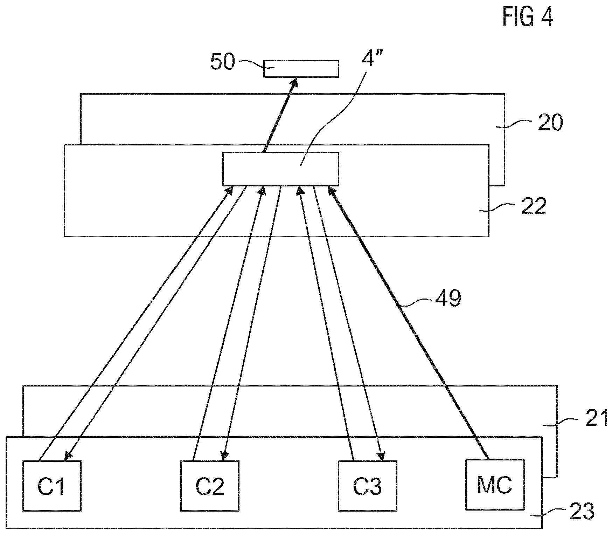

Ein weiterer Modus zur Überprüfung der Sicherheit im Automatisierungsnetzwerk ist die sogenannte "SIEM Trustability Verification", bei welcher die Zuverlässigkeit des SIEM-Systems in einer Art überprüft wird, die im Folgenden anhand Figur 4 erläutert wird. Diese Überprüfung der Zuverlässigkeit des SIEM-Systems kann wie die bereits beschriebenen Modi auf verschiedene Weise zu unterschiedlichen Zeiten initiiert werden. Dabei fordert das Modul 4" einen sogenannten Malicious Connector MC dazu auf, eine Manipulation der Kommunikation durchzuführen, z. B. unter einer falschen Identität Events in die Kommunikation zwischen dem Connector Layer 21, 23 und dem Intelligence Layer 20, 22 einzuspielen. Das heißt, es werden manipulierte Meldungen erzeugt, die den bei sicherheitsrelevanten Ereignissen durch ein Datenverarbeitungsgerät 2...7 erzeugten Meldungen entsprechen. Falls es dem Reliability and Trustability Verifier-Modul 4" gelingt, unter Verwendung von Mitteln aus dem Standardumfang des SIEM-Systems den Manipulationsversuch zu erkennen, ist das Ergebnis des Verifikationsvorgangs positiv. Andernfalls, d. h. wenn das Modul 4" die eingespielten Events nicht von den echten Events unterscheiden kann, die von einem legitimen Konnektor C1, C2 oder C3 versendet wurden, ist das Ergebnis negativ. Das Ergebnis wird vom Modul 4" spezifikationsgemäß weiterverarbeitet und ggf. an weitere Instanzen, z. B. in Form von Alarmen an ein SIEM-Meldesystem 38, weitergegeben. Durch diese Instanzen können umgehend angemessene Reaktionen, z. B. eine Neukonfiguration der vorhandenen Mechanismen zur gegenseitigen Authentifizierung zwischen dem SIEM-Connector Layer 21, 23 und dem SIEM-Intelligence Layer 20, 22 veranlasst werden.

Im Folgenden werden noch einmal kurz die Vorteile erläutert, die sich aus der Durchführung diverser Verifikationsvorgänge und / oder einer redundanten Architektur eines SIEM-Systems ergeben:

Durch die redundante Auslegung eines SIEM-Systems und die Umsetzung eines geeigneten Load-Balancing-Verfahrens wird dem durch die Überlastung des SIEM-Intelligence Layers und des Connector Layers sowie der Transportwege verursachten Event-Verlust vorgebeugt. Des Weiteren wird die Durchführung der beschriebenen Verifikationsvorgänge in einem SIEM-System ermöglicht. Während sich ein SIEM den primären SIEM-Aufgaben widmet, führt sein redundanter Partner, gesteuert durch das Reliability and Trustability Verifier-Modul, Verifikationsvorgänge durch.

Es ist sichergestellt, dass überprüft werden kann, ob die an ein SIEM-System angebundenen, in der Engineering-Phase ggf. angemessen konfigurierten Event-Quellen die zu ihrem Standardumfang gehörenden sicherheitsrelevanten Events in der Runtime-Phase tatsächlich generieren. Falls eine an ein SIEM-System angebundene Event-Quelle in der Runtime-Phase keine zu ihrem Standardumfang gehörenden Events generiert, wird dies durch das Reliability and Trustability Verifier-Modul bei einer "Events Generation Verification" erkannt und weitergemeldet. Dadurch wird ermöglicht, dass das erkannte Problem umgehend behoben werden kann.

Es ist weiterhin sichergestellt, dass überprüft werden kann, ob die Konnektoren, die für die Übermittlung von sicherheitsrelevanten Events von den Event-Quellen an die Auswerteeinheit zuständig sind, spezifikationsgemäß funktionieren. Eine Abweichung vom spezifikationsgemäßen Verhalten der Konnektoren wird durch das Reliability and Trustability Verifier-Modul bei der "Connectors Reliability Verification" erkannt und weitergemeldet. Dies ermöglicht ebenfalls eine umgehende Behebung des erkannten Problems.

Zudem wird eine Überprüfung ermöglicht, ob Events auf dem Übertragungsweg zur Auswerteeinheit eventuell unbemerkt verloren gehen oder manipuliert werden können. Der Verlust der Events auf dem Übertragungsweg kann durch das Reliability and Trustability Verifier-Modul bei der "Connectors Reliability Verification" und / oder bei der "SIEM Trustability Verification" erkannt und weitergemeldet werden. Eine erfolgreiche Manipulation der Events auch auf dem Übertragungsweg von dem sogenannten Malicious Connector zur Auswerteeinheit wird durch das Reliability and Trustability Verifier-Modul bei der "SIEM Trustability Verification" erkannt und weitergemeldet. Somit kann durch eine angemessene Reaktion auch dieses Problem umgehend behoben werden.

## Patentansprüche

1. Verfahren zur Überwachung der Sicherheit in einem Automatisierungsnetzwerk (1), in welchem mehrere Datenverarbeitungsgeräte (2...7) zur Datenkommunikation miteinander verbunden sind,
wobei zumindest ein Datenverarbeitungsgerät (5, 6, 7) im fehlerfreien Fall derart vorkonfiguriert ist, dass es bei sicherheitsrelevanten Ereignissen entsprechende Meldungen (30, 31, 32) erzeugt, wobei die Meldungen (30, 31, 32) in dem Automatisierungsnetzwerk (1) zu zumindest einem ersten Software-Werkzeug (3') übertragen werden, welches die Meldungen (30, 31, 32) erfasst und auswertet, um zu erkennen, ob ein sicherheitsrelevanter Angriff auf das Automatisierungsnetzwerk (1) stattfindet, **dadurch gekennzeichnet, dass** zur Überprüfung der Meldungserzeugung mithilfe eines zweiten Software-Werkzeugs (4') Angriffsszenarien simuliert werden, bei welchen durch das zumindest eine Datenverarbeitungsgerät (5, 6, 7) im fehlerfreien Fall dem jeweiligen Szenario entsprechende Meldungen erzeugt werden, und dass die Meldungen (30, 31, 32) in dem Automatisierungsnetzwerk (1) zusätzlich an das zweite Software-Werkzeug (4') übertragen werden, welches die Meldungen (30, 31, 32) erfasst und auswertet, um zu überprüfen, ob durch das zumindest eine Datenverarbeitungsgerät (5, 6, 7) die entsprechenden Meldungen bei sicherheitsrelevanten Ereignissen tatsächlich erzeugt werden.

2. Verfahren nach Anspruch 1, **dadurch gekennzeichnet, dass** die Überprüfung der Meldungserzeugung zyklisch in vorgegebenen oder vorgebbaren maximalen zeitlichen Abständen durchgeführt wird.

3. Verfahren nach Anspruch 1 oder 2, **dadurch gekennzeichnet, dass** zur Überprüfung der durch das erste Software-Werkzeug (3') durchgeführten Auswertung von Meldungen mithilfe des zweiten Software-Werkzeugs (4') manipulierte Meldungen (49) erzeugt werden, die den bei sicherheitsrelevanten Ereignissen durch das Datenverarbeitungsgerät (5, 6, 7) erzeugten Meldungen entsprechen.

4. Verfahren nach einem der vorhergehenden Ansprüche, **dadurch gekennzeichnet, dass** das erste Software-Werkzeug (3') ein Bestandteil eines ersten Werkzeugs zum sogenannten Security Information and Event Management im Automatisierungsnetzwerk (1) ist und dass das zweite Software-Werkzeug (4') ein Bestandteil eines zweiten Werkzeugs zum Security Information and Event Management ist, welches zu dem ersten Werkzeug zum Security Information and Event Management im Automatisierungsnetzwerk (1) redundant ausgeführt ist.

5. Verfahren nach einem der vorhergehenden Ansprüche, **dadurch gekennzeichnet, dass** die Überprüfung der durch das erste Software-Werkzeug (3') durchgeführten Meldungserzeugung zur Verifikation der Vorkonfigurierung des Datenverarbeitungsgeräts (5, 6, 7) in der Engineering-Phase und / oder zur Überwachung der Sicherheit während des Betriebs des Automatisierungsnetzwerks (1) durchgeführt wird.

6. Verfahren nach einem der vorhergehenden Ansprüche, **dadurch gekennzeichnet, dass** bei Erkennen eines Sicherheitsproblems in dem Automatisierungsnetzwerk (1) die Ausgabe eines Warnsignals zur Anzeige eventuell erforderlicher Wartungsmaßnahmen auf einem Servicegerät (10) erfolgt.

7. Automatisierungsnetzwerk mit einer Sicherheitsüberwachung, wobei in dem Automatisierungsnetzwerk (1) mehrere Datenverarbeitungsgeräte (2...7) zur Datenkommunikation miteinander verbunden sind, wobei zumindest ein Datenverarbeitungsgerät (5, 6, 7) im fehlerfreien Fall derart vorkonfiguriert ist, dass es bei sicherheitsrelevanten Ereignissen entsprechende Meldungen (30, 31, 32) erzeugt, wobei das Automatisierungsnetzwerk (1) derart ausgestaltet ist, dass die Meldungen zu zumindest einem Software-Werkzeug (3') übertragen werden, welches die Meldungen erfasst und auswertet, um zu erkennen, ob ein sicherheitsrelevanter Angriff auf das Automatisierungsnetzwerk (1) stattfindet, **dadurch gekennzeichnet, dass** das Automatisierungsnetzwerk (1) zudem derart ausgebildet ist, dass zur Überprüfung der Meldungserzeugung mithilfe eines zweiten Software-Werkzeugs (4') Angriffsszenarien simuliert werden, bei welchen durch das zumindest eine Datenverarbeitungsgerät (5, 6, 7) im fehlerfreien Fall dem jeweiligen Szenario entsprechende Meldungen erzeugt werden, und dass die Meldungen (30, 31, 32) zusätzlich an das zweite Software-Werkzeug (4') übertragen werden, welches die Meldungen (30, 31, 32) erfasst und auswertet, um zu überprüfen, ob durch das zumindest eine Datenverarbeitungsgerät (5, 6, 7) die entsprechenden Meldungen bei sicherheitsrelevanten Ereignissen tatsächlich erzeugt werden.

8. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

9. Computerprogrammprodukt, insbesondere Datenträger oder Speichermedium, mit einem durch einen Computer ausführbaren Computerprogramm gemäß Anspruch 8.

## Claims

1. Method for monitoring security in an automation network (1) in which a plurality of data processing devices (2...7) are connected to one another for the purpose of data communication, at least one data processing device (5, 6, 7) being preconfigured in the error-free case in such a manner that it generates corresponding messages (30, 31, 32) in the case of security-relevant events, the messages (30, 31, 32) in the automation network (1) being transmitted to at least one first software tool (3') which records and evaluates the messages (30, 31, 32) in order to discern whether there is a security-relevant attack on the automation network (1), **characterized in that**, in order to check the generation of messages with the aid of a second software tool (4'), attack scenarios are simulated in which messages corresponding to the respective scenario are generated by the at least one data processing device (5, 6, 7) in the error-free case, and **in that** the messages (30, 31, 32) in the automation network (1) are additionally transmitted to the second software tool (4') which records and evaluates the messages (30, 31, 32) in order to check whether the corresponding messages are actually generated by the at least one data processing device (5, 6, 7) in the case of security-relevant events.

2. Method according to Claim 1, **characterized in that** the generation of messages is checked cyclically in predefined or predefinable maximum intervals of time.

3. Method according to Claim 1 or 2, **characterized in that**, in order to check the evaluation of messages which is carried out by the first software tool (3') with the aid of the second software tool (4'), manipulated messages (49) which correspond to the messages generated by the data processing device (5, 6, 7) in the case of security-relevant events are generated.

4. Method according to one of the preceding claims, **characterized in that** the first software tool (3') is part of a first tool for so-called Security Information and Event Management in the automation network (1), and **in that** the second software tool (4') is part of a second tool for Security Information and Event Management which is designed in a redundant manner with respect to the first tool for Security Information and Event Management in the automation network (1).

5. Method according to one of the preceding claims, **characterized in that** the generation of messages carried out by the first software tool (3') is checked in order to verify the preconfiguration of the data processing device (5, 6, 7) in the engineering phase and/or in order to monitor security during operation of the automation network (1).

6. Method according to one of the preceding claims, **characterized in that**, when a security problem is detected in the automation network (1), a warning signal for indicating possibly required maintenance measures is output on a service device (10).

7. Automation network with security monitoring, a plurality of data processing devices (2...7) being connected to one another in the automation network (1) for the purpose of data communication, at least one data processing device (5, 6, 7) being preconfigured in the error-free case in such a manner that it generates corresponding messages (30, 31, 32) in the case of security-relevant events, the automation network (1) being configured in such a manner that the messages are transmitted to at least one software tool (3') which records and evaluates the messages in order to discern whether there is a security-relevant attack on the automation network (1), **characterized in that** the automation network (1) is also designed in such a manner that, in order to check the generation of messages with the aid of a second software tool (4'), attack scenarios are simulated in which messages corresponding to the respective scenario are generated by the at least one data processing device (5, 6, 7) in the error-free case, and that the messages (30, 31, 32) are additionally transmitted to the second software tool (4') which records and evaluates the messages (30, 31, 32) in order to check whether the corresponding messages are actually generated by the at least one data processing device (5, 6, 7) in the case of security-relevant events.

8. Computer program having program code instructions which can be executed by a computer for the purpose of implementing the method according to one of Claims 1 to 6 when the computer program is executed on a computer.

9. Computer program product, in particular a data storage medium or a storage medium, having a computer program according to Claim 8 which can be executed by a computer.

## Revendications

1. Procédé de contrôle de la sécurité dans un réseau (1) d'automatisation, dans lequel plusieurs appareils (2...7) de traitement de données sont reliés entre eux pour la communication de données,
dans lequel au moins un appareil (5, 6, 7) de traitement de données est, s'il n'y a pas d'erreur, préconfiguré, de manière à produire des messages (30, 31, 32) correspondant à des évènements pertinents du point de vue de la sécurité, les messages (30, 31, 32) étant transmis dans le réseau (1) d'automatisation à au moins un premier outil (3') logiciel, qui détecte les messages (30, 31, 32) et les exploite, afin de reconnaître si une attaque pertinente du point de vue de la sécurité a eu lieu sur le réseau (1) d'automatisation, **caractérisé en ce que**, pour le contrôle de la production de messages, on simule, à l'aide d'un deuxième outil (4') logiciel, des scénarii d'attaque, dans lesquels il est produit, par le au moins un appareil (5, 6, 7) de traitement de données, s'il ne se produit pas d'erreur, des messages correspondant au scénario respectif et **en ce que** l'on transmet les messages (30, 31, 32) dans le réseau (1) d'automatisation, en outre au deuxième outil (4') de logiciel, qui détecte les messages (30, 31, 32) et les exploite, pour contrôler si les messages correspondants, s'il se produit des évènements pertinents du point de vue de la sécurité, ont été produits réellement par le au moins un appareil (5, 6, 7) de traitement de données.

2. Procédé suivant la revendication 1, **caractérisé en ce que** l'on effectue le contrôle de la production de messages cycliquement, à des intervalles de temps maximum donnés à l'avance ou pouvant l'être.

3. Procédé suivant la revendication 1 ou 2, **caractérisé en ce que**, pour le contrôle de l'exploitation de messages effectué par le premier outil (3') logiciel, on produit des messages (49) manipulés à l'aide du deuxième outil (4') logiciel, qui correspondent aux messages produits par l'appareil (5, 6, 7) de traitement de données lors d'évènements pertinents du point de vue de la sécurité.

4. Procédé suivant l'une des revendications précédentes, **caractérisé en ce que** le premier outil (3') logiciel fait partie d'un premier outil pour ce que l'on appelle le Security-Information and Event Management dans le réseau (1) d'automatisation et **en ce que** le deuxième outil (4') logiciel fait partie d'un deuxième outil pour le Security-Information and Event Management, qui est réalisé de manière redondante au premier outil pour le Security-Information and Event Management du réseau (1) d'automatisation.

5. Procédé suivant l'une des revendications précédentes, **caractérisé en ce que** le contrôle de la production de messages, effectué par le premier outil (3') logiciel, est effectué pour la vérification de la préconfiguration de l'appareil (5, 6, 7) de traitement de données, dans la phase d'engineering et/ou pour le contrôle de la sécurité pendant le fonctionnement du réseau (1) d'automatisation.

6. Procédé suivant l'une des revendications précédentes, **caractérisé en ce qu'**à la reconnaissance d'un problème de sécurité dans le réseau (1) d'automatisation s'effectue l'émission d'un signal d'alerte pour indiquer des mesures d'entretien nécessaires éventuellement sur un appareil (10) de service.

7. Réseau d'automatisation comprenant un contrôle de sécurité, dans lequel, dans le réseau (1) d'automatisation, plusieurs appareils (2...7) de traitement de données sont reliés entre eux pour la communication de données, dans lequel au moins un appareil (5, 6, 7) de traitement de données est, s'il n'y a pas d'erreur, préconfiguré, de manière à produire, pour des évènements pertinents du point de vue de la sécurité, des messages (30, 31, 32) correspondants, le réseau (1) d'automatisation étant conformé de manière à transmettre les messages à au moins un outil (3') logiciel, qui détecte les messages et les exploite, pour reconnaître si une attaque du point de vue de la sécurité a eu lieu sur le réseau (1) d'automatisation, **caractérisé en ce que** le réseau (1) d'automatisation est constitué en outre de manière à simuler, pour le contrôle de la production de messages, à l'aide d'un deuxième outil (4') logiciel, des scénarii d'attaque, dans lesquels il est produit, par le au moins un appareil (5, 6, 7) de traitement de données, s'il n'y a pas d'erreur, des messages correspondant au scénario respectif et **en ce que** les messages (30, 31, 32) sont transmis supplémentairement au deuxième outil (4') logiciel, qui détecte les messages (30, 31, 32) et les exploit, pour contrôler s'il est produit réellement, pour des évènements pertinents du point de vue de la sécurités, les messages correspondants, par le au moins un appareil (5, 6, 7) de traitement de données.

8. Programme d'ordinateur comprenant des instructions de code de programme pouvant être réalisé par un ordinateur, pour la mise en oeuvre du procédé suivant l'une des revendications 1 à 6, lorsque le programme d'ordinateur est réalisé sur un ordinateur.

9. Produit de programme d'ordinateur, notamment support de données ou support de mémoire, comprenant un programme d'ordinateur pouvant être réalisé sur un ordinateur suivant la revendication 8.
